# EUROPEAN PATENT APPLICATION

(11) **EP 1 493 778 A1**
(43) Date of publication of application: **05.01.2005**
(21) Application number: 03102017.5
(22) Date of filing: 04.07.2003
(51) Int. Cl.: C08L 23/10

(54) **Polyolefin production**

(71) Applicant: TOTAL PETROCHEMICALS RESEARCH FELUY, 7181 Seneffe (Feluy) (BE)
(72) Inventor: Razavi, Abbas, B-7000, Mons (BE)
(74) Representative: Leyder, Francis

(57) **Abstract**

Provided is an olefm polymer comprising:
(a) a polyolefin component A that is crystalline and is formed using a metallocene catalyst; and
(b) a polyolefin component B that is less crystalline than component A and is formed using a metallocene catalyst;
wherein components A and B arc selected from isotactic polyolefins, syndiotactic polyolefins, atactic polyolefins and polyolefins comprising blocks of one or more of the above.

## Description

The present invention relates to polyolefins having a narrow molecular weight distribution and improved thermal bonding behaviour, and to methods for producing such polyolefins. In particular, the invention relates to polypropylene fibres and to fabrics produced from polypropylene fibres.

Polypropylene is well known for the manufacture of fibres, particularly for manufacturing non-woven fabrics.

EP-A-0789096 and its corresponding WO-A-97/29225 discloses such polypropylene fibres which are made of a blend of syndiotactic polypropylene (sPP) and isotactic polypropylene (iPP). That specification discloses that by blending from 0.3 to 3% by weight of sPP, based on the total polypropylene, to form a blend of iPP-sPP, the fibres have increased natural bulk and smoothness, and non-woven fabrics produced from the fibres have an improved softness. Moreover, that specification discloses that such a blend lowers the thermal bonding temperature of the fibres. Thermal bonding is employed to produce the non-woven fabrics from the polypropylene fibres. The specification discloses that the isotactic polypropylene comprises a homopolymer formed by the polymerisation of propylene by Ziegler-Natta catalysis. The isotactic polypropylene typically has a weight average molecular weight Mw of from 100,000 to 4,000,000 and a number average molecular weight Mn of from 40,000 to 100,000, with a melting point of from about 159 to 165°C. However, the polypropylene fibres produced in accordance with this specification suffer from the technical problem that the isotactic polypropylene, being made using a Ziegler-Natta catalyst, does not have particularly high mechanical properties, particularly tenacity.

WO-A-96/23095 discloses a method for providing a non-woven fabric with a wide bonding window in which the non-woven fabric is formed from fibres of a thermoplastic polymer blend including from 0.5 to 25 wt% of syndiotactic polypropylene. The syndiotactic polypropylene may be blended with a variety of different polymers, including isotactic polypropylene. The specification includes a number of examples in which various mixtures of syndiotactic polypropylene with isotactic polypropylene were produced. The isotactic polypropylene comprised commercially available isotactic polypropylene, which is produced using a Ziegler-Natta catalyst. It is disclosed in the specification that the use of syndiotactic polypropylene widens the window of temperature over which thermal bonding can occur, and lowers the acceptable bonding temperature.

WO-A-96/23095 also discloses the production of fibres from blends including syndiotactic polypropylene which are either bi-component fibres or bi-constituent fibres. Bi-component fibres are fibres which have been produced from at least two polymers extruded from separate extruders and spun together to form one fibre. Bi-constituent fibres are produced from at least two polymers extruded from the same extruder as a blend. Both bi-component and bi-constituent fibres are disclosed as being used to improve the thermal bonding of Ziegler-Natta polypropylene in non-woven fabrics. In particular, a polymer with a lower melting point compared to the Ziegler-Natta isotactic polypropylene, for example polyethylene, random copolymers or terpolymers, is used as the outer part of the bi-component fibre or blended in the Ziegler-Natta polypropylene to form the bi-constituent fibre.

EP-A-0634505 discloses improved propylene polymer yarn and articles made therefrom in which for providing yarn capable of increased shrinkage syndiotactic polypropylene is blended with isotactic polypropylene with there being from 5 to 50 parts per weight of syndiotactic polypropylene. It is disclosed that the yarn has increased resiliency and shrinkage, particularly useful in pile fabric and carpeting. It is disclosed that the polypropylene blends display a lowering of the heat softening temperature and a broadening of the thermal response curve as measured by differential scanning calorimetry as a consequence of the presence of syndiotactic polypropylene.

US-A-5269807 discloses a suture fabricated from syndiotactic polypropylene exhibiting a greater flexibility than a comparable suture manufactured from isotactic polypropylene. The syndiotactic polypropylene may be blended with, *inter alia*, isotactic polypropylene.

EP-A-0451743 discloses a method for moulding syndiotactic polypropylene in which the syndiotactic polypropylene may be blended with a small amount of a polypropylene having a substantially isotactic structure. It is disclosed that fibres may be formed from the polypropylene. It is also disclosed that the isotactic polypropylene is manufactured by the use of a catalyst comprising titanium trichloride and an organoaluminium compound, or titanium trichloride or titanium tetrachloride supported on magnesium halide and an organoaluminium compound, *i*.*e*. a Ziegler-Natta catalyst.

EP-A-0414047 discloses polypropylene fibres formed of blends of syndiotactic and isotactic polypropylene. The blend includes at least 50 parts by weight of the syndiotactic polypropylene and at most 50 parts by weight of the isotactic polypropylene. It is disclosed that the extrudability of the fibres is improved and the fibre stretching conditions are broadened.

It is further known to produce syndiotactic polypropylene using metallocene catalysts as has been disclosed for example in US-A-4794096.

Recently, metallocene catalysts have also been employed to produce isotactic polypropylene. Isotactic polypropylene which has been produced using a metallocene catalyst is identified hereinafter as miPP. Fibres made of miPP exhibit much higher mechanical properties, mainly tenacity, than typical Ziegler-Natta polypropylene based fibres, hereinafter referred to as ZNPP fibres. However, this gain in tenacity is only partly transferred to non-woven fabrics which have been produced from the miPP fibres by thermal bonding. Indeed, fibres produced using miPP have a very narrow thermal bonding window, the window defining a range of thermal bonding temperatures through which, after thermal bonding of the fibres, the non-woven fabric exhibits the best mechanical properties. As a result, only a small number of the miPP fibres contribute to the mechanical properties of the non-woven fabric. Also, the quality of the thermal bond between adjacent miPP fibres is poor. Thus known miPP fibres have been found to be more difficult to thermally bond than ZNPP fibres, despite a lower melting point.

WO-A-97/10300 discloses polypropylene blend compositions wherein the blend may comprise from 25% to 75% by weight metallocene isotactic polypropylene and from 75 to 25% by weight Ziegler-Natta isotactic polypropylene copolymer. The specification is fundamentally directed to the production of films from such polypropylene blends.

US-A-5483002 discloses propylene polymers having low-temperature impact strength containing a blend of one semi-crystalline propylene homopolymer with either a second semi-crystalline propylene homopolymer or a non-crystallising propylene homopolymer.

EP-A-0538749 discloses a propylene copolymer composition for production of films. The composition comprises a blend of two components, the first component comprising either a propylene homopolymer or a copolymer of propylene with ethylene or another alpha-olefin having a carbon number of 4 to 20 and the second component comprising a copolymer of propylene with ethylene and/or an alpha-olefin having a carbon number of 4 to 20.

It is known in the art to blend into a polypropylene produced using a Ziegler-Natta catalyst a second component comprising a random polypropylene, typically in an amount of around 20 to 50 wt% of the blend. Such a blend has been found to provide good thermal bonding when fibres produced from the blend are thermally bonded to form a non-woven fabric. The good thermal bonding results from a temperature overlap of the melting points of the Ziegler-Natta polypropylene and the random polypropylene. The thermal bonding is also achieved as a result of both the Ziegler-Natta polypropylene and the random polypropylene having relatively broad molecular weight distributions which provides a good blend and thus tends to enhance the thermal bond ability of fibres.

A polypropylene fibre is also known including at least 80% by weight of a first isotactic polypropylene produced by a metallocene catalyst, and from 5 to 20% by weight of a second isotactic polypropylene produced by a Ziegler-Natta catalyst. Further, a polypropylene fibre is known including greater than 50% by weight of a first isotactic polypropylene produced by a Ziegler-Natta catalyst, from 5 to less than 50% by weight of a second isotactic polypropylene produced by a metallocene catalyst and up to 15% by weight of a syndiotactic polypropylene (sPP).

The miPP produced according to these known processes has improved tenacity and is stable for spinning fibres. However, there is still a problem that it is difficult to achieve a narrow molecular weight distribution and additionally that the thermal bonding behaviour is not as good as desired. In particular, miPP produced using Ziegler-Natta catalysts must be subjected to a controlled rheology process to achieve the required narrow molecular weight distribution. This involves applying a peroxide during extrusion to cut the longer polymer chains. This process increases the cost of production.

It is an aim of the present invention to overcome these and other problems associated with the known products and processes, particularly those described above. Thus, it is an aim of the present invention to provide a catalyst for producing a polyolefin having a narrow molecular weight distribution and improved thermal bonding behaviour. It is a further aim of the present invention to provide improved polyolefin fibres and improved products made from such fibres.

Accordingly, the present invention provides an olefin polymer comprising:
(a) a polyolefin component A that is crystalline and is formed using a metallocene catalyst; and
(b) a polyolefin component B that is less crystalline than component A and is formed using a metallocene catalyst;
wherein components A and B are selected from isotactic polyolefins, syndiotactic polyolefins, atactic polyolefins and polyolefins comprising blocks of one or more of the above.

The advantage of using metallocene catalysts is that they produce polymers having a narrow molecular weight distribution. In addition, the inclusion of a lower crystallinity component B adds 'stickiness' to the mixture, which improves the mixing of the components and the thermal bonding properties of the final polymer, by lowering the melt temperature.

Thus, in the context of the present invention, catalysts for producing components A and B are catalysts capable of producing substantially homopolymeric isotactic polyolefin and/or substantially homopolymeric syndiotactic polyolefin respectively. Alternatively the catalysts may be capable of producing a block co-polymer which comprises at least one isotactic polyolefin block or at least one syndiotactic polyolefin block. The block co-polymers may be co-polymers, ter-polymers or co-polymers comprising more than three different polymer blocks. The further blocks in the block co-polymers are not especially limited and may be blocks formed from olefin monomers, or blocks formed from other monomers.

As mentioned above, the olefin polymer has a narrow molecular weight distribution. Typically the combined molecular weight distribution of components A and B has a single peak, characteristic of a monomodal molecular weight distribution. Although the peak is characteristic of such a distribution, since the polymer comprises two components it is in reality bimodal. This bimodality can lead to a preferred single peak, as mentioned above, or in some cases to a peak having a shoulder or to two peaks. The form of the distribution is not particularly limited provided that the distribution is narrow. Preferably the combined molecular weight distribution of components A and B has a dispersion index D of 4 or less, more preferably of from 1.8 to 4. More preferably, the combined molecular weight distribution of components A and B has a dispersion index D of from 2 to 3 and most preferably of about 2. The dispersion index D is the ratio Mw/Mn, where Mw is the weight number average molecular weight and Mn is the number average molecular weight of the polymer.

The polymer preferably has a melting temperature in the range of from 130°C to 155°C. The less crystalline component typically has a melting temperature of up to 130°C, whilst the more crystalline component generally has a melting temperature of from 80-160°C.

The polyolefin may be formed from any olefin monomer having 3 or more carbon atoms, such as propylene, butene, pentene and/or hexene. Preferably, component A and/or component B comprise a polypropylene. It is especially preferred that component A comprises an isotactic polypropylene (iPP) and component B comprises a polypropylene selected from isotactic polypropylene and syndiotactic polypropylene (sPP). The proportions of each component in the mix are not especially limited provided that each component is present. Preferably the final polymer comprises from 1-99 wt.% component A and from 1-99 wt.% component B. More preferably the fmal polymer comprises up to 80 wt.%% of component A and up to 20 wt.% of component B. Most preferably the polymer comprises around 15 wt.% component B. Thus, for example, when the polymer comprises sPP, it is preferred that it comprises up to 15 wt.% sPP.

The catalysts employed in the production of the polymer are not especially limited, provided that the polymer is produced with the correct characteristics. Preferred catalysts for use in the present invention will be described below.

In some embodiments of the invention, the type of polyolefin to be produced may be controlled by selecting the symmetry of the catalyst. Metallocene catalysts particularly suitable for use in the present invention are those comprising one cyclopentadienyl group and one fluorenyl group (CpFlu catalysts), and those comprising two indenyl groups (bisindenyl catalysts). The symmetry of these catalysts can be particularly advantageously controlled. For example, bisindenyl catalysts are particularly suitable for producing isotactic polyolefins when having C₂ symmetry (a single 180° rotation axis (see Scheme 1)). On the other hand CpFlu catalysts are particularly suitable for producing isotactic polyolefins when having C₁ symmetry (only a single 360° rotation axis through the molecule (see Scheme 2)), whilst they are particularly suitable for producing syndiotactic polyolefins when having Cₛ symmetry (a single plane of reflection through the molecule (see Scheme 3)).

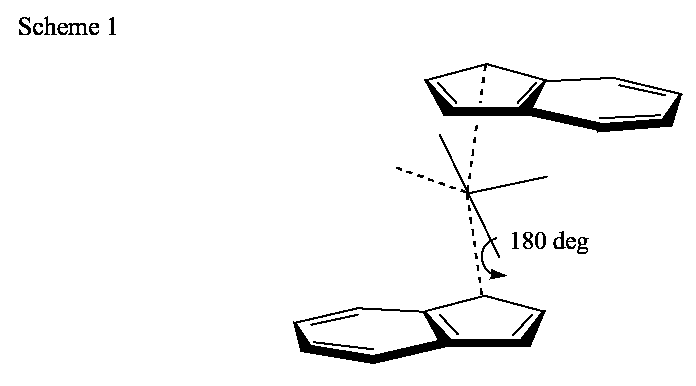

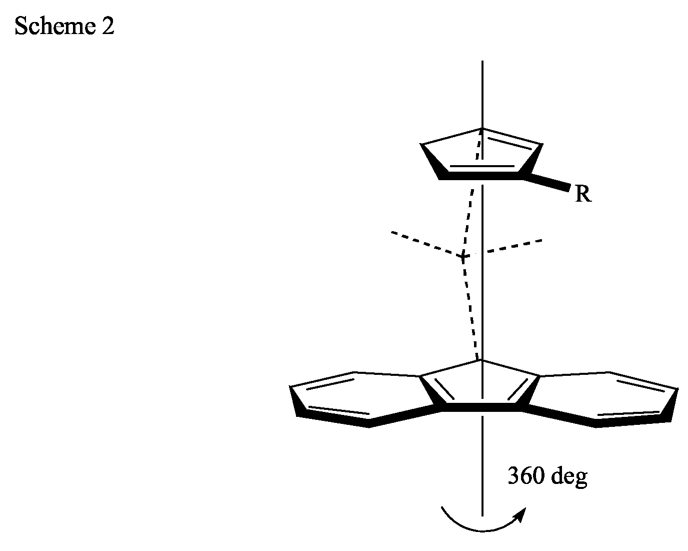

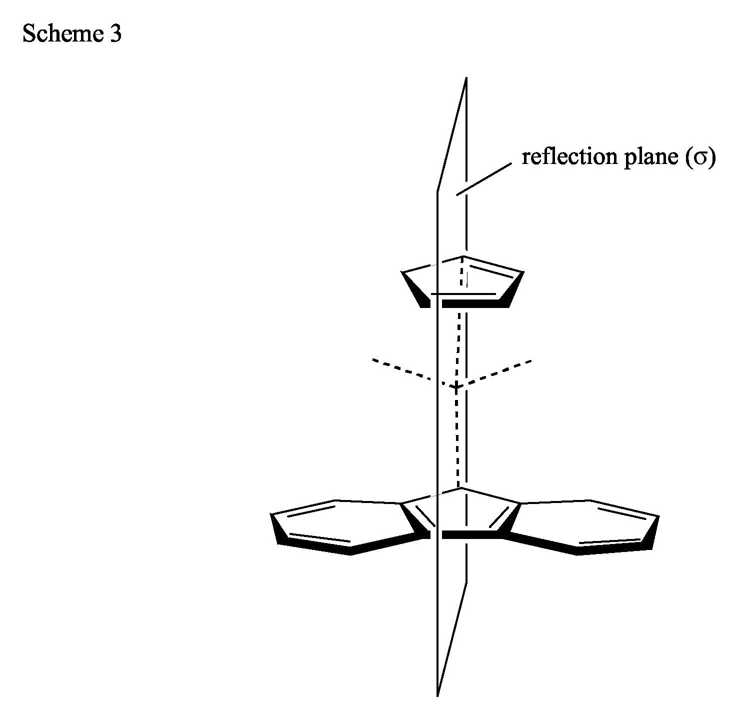

It should be noted that these are schematic representations only with the metal centres removed for clarity. The Cp, Indenyl and Flu rings may be saturated, unsaturated or further substituted, provided that the symmetry is not affected.

When the metallocene catalyst for producing component A and/or component B is a catalyst for producing an isotactic polyolefin, the metallocene preferably has the formula:

R"(CpR¹R²R³)(Cp'R'ₙ)MQ₂

wherein Cp is a substituted cyclopentadienyl ring; Cp' is a substituted or unsubstituted fluorenyl ring; R" is a structural bridge imparting stereorigidity to the component; R¹ is a substituent on the cyclopentadienyl ring which is distal to the bridge, which distal substituent comprises a bulky group of the formula ZR*₃ in which Z is an atom from group IVA and each R* is the same or different and is chosen from a hydrogen or a hydrocarbyl group having from 1-20 carbon atoms, R² is a substituent on the cyclopentadienyl ring which is proximal to the bridge and positioned non-vicinal to the distal substituent and is H or a group of the formula YR#₃ in which Y is an atom from group IVA, and each R# is the same or different and is chosen from a hydrogen or a hydrocarbyl group having from 1-7 carbon atoms, R³ is a further substituent on the cyclopentadienyl ring and may be the same or different from R² and is H or a group of the formula YR#₃ in which Y is an atom from group IVA, and each R# is the same or different and is chosen from a hydrogen or a hydrocarbyl group having from 1-7 carbon atoms, each R'ₙ is the same or different and is a hydrocarbyl group having from 1-20 carbon atoms, and n is an integer of from 0-8; M is a metal atom from group IVB or is vanadium; and each Q is a hydrocarbon having from 1-20 carbon atoms or is a halogen;
or the formula:

(IndH₄)₂R"MQ₂

wherein each IndH₄ is the same or different and is a substituted or unsubstituted tetrahydroindenyl group, R" is a structural bridge imparting stereorigidity to the component; M is a metal atom from group IVB or is vanadium; and each Q is a hydrocarbon having from 1-20 carbon atoms or is a halogen;

When the metallocene catalyst for producing component A and/or component B is a catalyst for producing a polyolefin having an isotactic block, the metallocene preferably has the formula:

R"(CpRₘ)(CpR'ᵣ)MQ₂

wherein each Cp is a substituted cyclopentadienyl ring; R" is a structural bridge imparting stereorigidity to the component; each R is the same or different and is a hydrocarbyl group having from 1-20 carbon atoms, each R' is the same or different and is a hydrocarbyl group having from 1-20 carbon atoms, and m and r are independently an integer of from 0-4; M is a metal atom from group IVB or is vanadium; and each Q is a hydrocarbon having from 1-20 carbon atoms or is a halogen.

When the metallocene catalyst for producing component A and/or component B is a catalyst for producing a syndiotactic polyolefin, the metallocene preferably has the formula:

R"(CpRₓ)(Cp'R'_{y})MQ₂

wherein Cp is a substituted or unsubstituted cyclopentadienyl ring; Cp' is a substituted or unsubstituted fluorenyl ring; R" is a structural bridge imparting stereorigidity to the component; each R is the same or different and is a hydrocarbyl group having from 1-20 carbon atoms, each R' is the same or different and is a hydrocarbyl group having from 1-20 carbon atoms, and x and y are independently an integer of from 0-4 and 0-8 respectively; M is a metal atom from group IVB or is vanadium; and each Q is a hydrocarbon having from 1-20 carbon atoms or is a halogen; and wherein the catalyst exhibits bilateral symmetry.

When the metallocene catalyst for producing component A and/or component B is a catalyst for producing a polyolefin having a syndiotactic block, the metallocene preferably has the formula:

R"(CpR_{q})XMQ

wherein Cp is a substituted cyclopentadienyl ring or a substituted or unsubstituted fluorenyl ring; R" is a structural bridge between Cp and X imparting stereorigidity to the component; each R is the same or different and is a hydrocarbyl group having from 1-20 carbon atoms; when Cp is a cyclopentadienyl ring, q is an integer from 0-4 and when Cp is a fluorenyl ring q is an integer from 0-8; X is a heteroatom from group VA or group VIA and may be substituted or unsubstituted; M is a metal atom from group IVB or is vanadium; and each Q is a hydrocarbon having from 1-20 carbon atoms or is a halogen; and wherein the bilateral symmetry of the catalyst is maintained.

In the above formulae, it is particularly preferred that M is Ti, Zr, or Hf. It is also preferred that Q is Cl. Typically, R" is substituted or unsubstituted and comprises an alkylene radical having from 1-20 carbon atoms, a dialkyl germanium group, a dialkyl silicon group, a dialkyl siloxane group, an alkyl phosphine radical or an amine radical. Generally, R" comprises an isopropylidene (Me₂C), Ph₂C, ethylenyl, or Me₂Si group.

The present invention also provides a polyolefin fibre formed from an olefin polymer as defined above, and a fabric produced from such a polyolefin fibre. Typically, products including a fabric as above may include a filter, personal wipe, diaper, feminine hygiene product, incontinence product, wound dressing, bandage, surgical gown, surgical drape, protective cover, geotextiles and outdoor fabrics.

Although it was known prior to the present invention to use a second polymer in fibres, it has not yet been proposed to employ polyolefins produced using only metallocene catalysts for the production of fibres. Efficient thermal bonding of the fibres is required to transfer the outstanding mechanical properties of the fibres into non-woven fabrics. The spinnability of the fibres produced in accordance with the invention is not significantly modified as compared to known fibres.

The fibres produced in accordance with the invention may be either bi-component fibres or bi-constituent fibres. For bi-component fibres, the components A and B are fed into two different extruders. Thereafter the two extrudates are spun together to form single fibres. For the bi-constituent fibres, blends of component A and B are obtained by: dry blending pellets, flakes or fluff of the two polymers before feeding them into a common extruder; or using pellets or flakes of a blend which have been extruded together and then re-extruding the blend from a second extruder.

When the blends of component A and B are used to produce fibres in accordance with the invention, it is possible to adapt the temperature profile of the spinning process to optimise the processing temperature yet retaining the same throughput as with pure miPP. For the production of spunlaid fibres, a typical extrusion temperature would be in the range of from 200°C to 260°C, most typically from 230°C to 250°C. For the production of staple fibres, a typical extrusion temperature would be in the range of from 230°C to 330°C, most typically from 270°C to 310°C.

The fibres produced in accordance with the invention may be produced from blends having other additives to improve the mechanical processing or spinnability of the fibres. The fibres produced in accordance with the invention may be used to produce non-woven fabrics for use in filtration; in personal care products such as wipers, diapers, feminine hygiene products and incontinence products; in medical products such as wound dressings, surgical gowns, bandages and surgical drapes; in protective covers; in outdoor fabrics and in geotextiles. Non-woven fabrics made with the polypropylene blend fibres of the invention can be part of such products, or constitute entirely the products. As well as making non-woven fabrics, the fibres may also be employed to make a knitted fabric or a mat. The non-woven fabrics produced from the fibres in accordance with the invention can be produced by several processes, such as air through blowing, melt blowing, spun bonding or bonded carded processes. The fibres of the invention may also be formed as a non-woven spunlace product which is formed without thermal bonding by fibres being entangled together to form a fabric by the application of a high pressure-fluid such as air or water.

Finally, the present invention also provides a method for producing a polyolefin which polyolefin comprises:
(a) a polyolefin component A that is crystalline and is formed using a metallocene catalyst; and
(b) a polyolefin component B that is less crystalline than component A and is formed using a metallocene catalyst;
wherein components A and B are selected from isotactic polyolefins, syndiotactic polyolefins, atactic polyolefins and polyolefins comprising blocks of one or more of the above;
which method comprises polymerising monomers to form components A and B together in the same reaction zone with a multi-site metallocene catalyst to form the polyolefin.

Thus, the present invention provides a method for producing a blend of polyolefins, such as an isotactic polyolefin and a syndiotactic polyolefin, which method comprises polymerising olefin monomers in the presence of a multi-site catalyst, such as a dual site catalyst, to form a polymer blend (a chemical blend). A multi-site catalyst is a catalyst in which each catalyst component is present on individual grains of the support. These can be produced by forming a solution comprising all of the catalyst components and then depositing the components on the support.

The use of a catalyst mixture to produce an *in situ* mixture of polyolefin, e.g. isotactic polyolefin and syndiotactic polyolefin (a chemical blending process), leads to polymer blends (chemical blends) that are much more homogeneous than known blends produced by a physical blending process. The improved homogeneity of chemical blends contributes to improved physical and mechanical properties. Thus, the chemical blending process is particularly preferred.

Thus, the polymer blends produced according to the present invention have improved processibility and solidification properties in injection blow moulding and injection moulding, whilst simultaneously showing high transparency and flexibility. Fibres formed from the present blends have improved softness and improved thermal bonding characteristics. Films produced from the present blends have a reduced modulus, being less stiff and have improved heat shrink, tear resistance and impact resistance characteristics.

The catalyst used in these aspects of the present invention is not especially limited. Thus, the catalyst mixture may be a multisite catalyst in which two or more catalysts (such as a catalyst for component A and a different catalyst for component B) are situated together on the same support.

Preferably, the catalysts employed in the present methods are selected from the catalysts already described in detail above.

It is further preferred that the olefin monomer employed in the present methods comprises propylene such that the polyolefin of component A and/or B comprises a polypropylene.

Typically in the present methods, the catalysts are selected such that component A comprises an isotactic polypropylene (iPP) and component B comprises a polypropylene selected from isotactic polypropylene and syndiotactic polypropylene (sPP).

The catalyst systems used in the present invention comprise, in addition to the above catalyst components, one or more activating agents capable of activating the metallocene catalyst. Typically, the activating agent comprises an aluminium- or boron-containing activating agent.

Suitable aluminium-containing activating agents comprise an alumoxane, an alkyl aluminium compound and/or a Lewis acid.

The alumoxanes that can be used in the present invention are well known and preferably comprise oligomeric linear and/or cyclic alkyl alumoxanes represented by the formula (A): 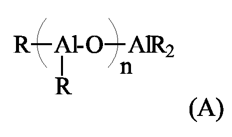 for oligomeric linear alumoxanes; and formula (B) 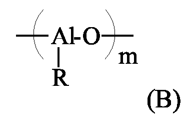 for oligomeric cyclic alumoxanes,
wherein n is 1-40, preferably 10-20; m is 3-40, preferably 3-20; and R is a C₁-C₈ alkyl group, preferably methyl. Generally, in the preparation of alumoxanes from, for example, aluminium trimethyl and water, a mixture of linear and cyclic compounds is obtained.

Suitable boron-containing activating agents may comprise a triphenylcarbenium boronate, such as tetrakis-pentafluorophenyl-borato-triphenylcarbenium as described in EP-A-0427696: 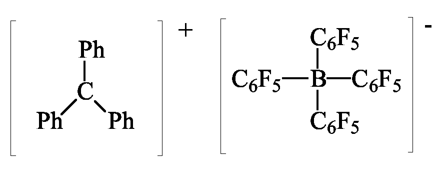 or those of the general formula below, as described in EP-A-0277004 (page 6, line 30 to page 7, line 7):

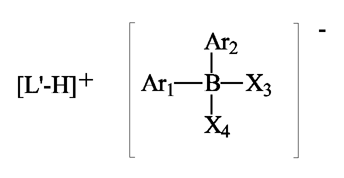

Other preferred activating agents include hydroxy isobutylaluminium and a metal aluminoxinate. These are particularly preferred when at least one Q in the general formula for metallocenes comprises an alkyl group.

The catalyst system may be employed in a solution polymerisation process, which is homogeneous, or a slurry process, which is heterogeneous. In a solution process, typical solvents include hydrocarbons having 4-7 carbon atoms such as heptane, toluene or cyclohexane. In a slurry process it is necessary to immobilise the catalyst system on an inert support, particularly a porous solid support such as talc, inorganic oxides and resinous support materials such as polyolefin. Preferably, the support material is an inorganic oxide in its finely divided form.

Suitable inorganic oxide materials which are desirably employed in accordance with this invention include group IIA, IIIA, IVA, or IVB metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalised polyolefins such as finely divided polyethylene.

Preferably, the support is a silica support having a surface area of from 200-700 m²/g and a pore volume of from 0.5-3 ml/g.

The amount of activating agent and metallocene usefully employed in the preparation of the solid support catalyst can vary over a wide range. Preferably the activating agent to transition metal mole ratio is in the range between 1:1 and 100:1, preferably in the range 5:1 and 50:1.

The order of addition of the catalyst and activating agent to the support material can vary. In accordance with a preferred embodiment of the present invention activating agent dissolved in a suitable inert hydrocarbon solvent is added to the support material slurried in the same or other suitable hydrocarbon liquid and thereafter a the catalyst component is added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane and cyclohexane, and aromatics such as benzene, toluene, ethylbenzene and diethylbenzene.

Preferably the support material is slurried in toluene and the catalyst component and activating agent are dissolved in toluene prior to addition to the support material.

## Claims

1. An olefin polymer comprising:
(a) a polyolefin component A that is crystalline and is formed using a metallocene catalyst; and
(b) a polyolefin component B that is less crystalline than component A and is formed using a metallocene catalyst;
wherein components A and B are selected from isotactic polyolefins, syndiotactic polyolefins, atactic polyolefins and polyolefins comprising blocks of one or more of the above.

2. An olefin polymer according to claim 1, wherein the combined molecular weight distribution of components A and B has a single peak, characteristic of a monomodal molecular weight distribution..

3. An olefin polymer according to claim 1 or claim 2, wherein the combined molecular weight distribution of components A and B has a dispersion index D of from 4 or less.

4. An olefin polymer according to claim 3, wherein the combined molecular weight distribution of components A and B has a dispersion index D of from 2 to 3.

5. An olefin polymer according to any preceding claim having a melting temperature of from 130°C to 155°C

6. An olefin polymer according to any preceding claim, wherein component A and/or component B comprise a polypropylene.

7. An olefin polymer according to claim 6, wherein component A comprises an isotactic polypropylene (iPP) and component B comprises a polypropylene selected from isotactic polypropylene and syndiotactic polypropylene (sPP).

8. An olefin polymer according to claim 7, comprising up to 15 wt.% sPP as component B.

9. A polyolefin fibre formed from an olefin polymer as defined in any of claims 1-8.

10. A fabric produced from a polyolefin fibre as defined in claim 9.

11. A product comprising a fabric as defined in claim 10, the product being selected from a filter, personal wipe, diaper, feminine hygiene product, incontinence product, wound dressing, bandage, surgical gown, surgical drape, protective cover, geotextiles and outdoor fabrics.

12. A method for producing a polyolefin which polyolefin comprises:
(a) a polyolefin component A that is crystalline and is formed using a metallocene catalyst; and
(b) a polyolefin component B that is less crystalline than component A and is formed using a metallocene catalyst;
wherein components A and B are selected from isotactic polyolefins, syndiotactic polyolefins, atactic polyolefins and polyolefins comprising blocks of one or more of the above;
which method comprises polymerising monomers to produce components A and B in the same reaction zone using a multi-site metallocene catalyst.

13. A method according to claim 12, wherein the catalyst is a dual-site catalyst.

14. A method according to claim 12 or claim 13, wherein the polyolefin of component A and/or B comprises a polypropylene.

15. A method according to any of claims 12-14, wherein component A comprises an isotactic polypropylene (iPP) and component B comprises a polypropylene selected from isotactic polypropylene and syndiotactic polypropylene (sPP).

16. Use of an olefin polymer as defined in any of claims 1-8, to improve the thermal bonding characteristics of a polyolefin fibre.
